# EUROPEAN PATENT APPLICATION

(11) **EP 1 231 479 A1**
(43) Date of publication of application: **14.08.2002**
(21) Application number: 02250731.3
(22) Date of filing: 01.02.2002
(51) Int. Cl.: G01S 5/14, G08B 21/00, B60R 25/00

(54) **Safety system**

(30) Priority: 02.02.2001 GB 0102656; 10.04.2001 GB 0108901
(71) Applicant: Hanson Quarry Products Europe Limited, Bristol BS37 6AY (GB)
(72) Inventor: Wood, Roland John, Little Eaton, Derby DE21 5DR (GB); Morgan, David Johnathon, Little Eaton, Derby DE21 5DR (GB)
(74) Representative: Prentice, Raymond Roy

(57) **Abstract**

A safety system for use with moving vehicles and/or plant on a commercial or industrial site comprises a radio frequency transmitter unit (3) adapted to transmit positional information indicative of its location and a receiver unit (2) adapted to compare the location of the transmitter unit (3) with its own location. If the distance between the transmitter unit (3) and the receiver unit (2) is less than a predetermined threshold value, a warning signal is emitted by the receiver unit (2). The transmitter unit (3) and the receiver unit (2) are preferably provided with GPS receivers (11, 5) to provide Global Positional System (GPS) functionality from a satellite (10). The receiver unit (2) is desirably mounted on a vehicle (1) and the transmitter unit (3) is preferably arranged to be worn by a person (4) by means of a harness (15).

## Description

This invention relates to a safety system, and in particular to a system for safeguarding personnel working in the vicinity of moving plant or vehicles on an industrial or commercial site.

Injuries caused by collisions between moving vehicles and personnel working in their vicinity are commonplace. The visibility of the surroundings to drivers of vehicles such as dump trucks and forklift trucks etc is often poor and the drivers may be preoccupied with the tasks they are performing. The environment in which the vehicles operate may be cramped and/or poorly lit, with an increased risk of collisions.

In view of these problems, much effort has been expended on developing systems which alert the driver of a vehicle in such an environment to the presence of personnel in the vicinity, or vice versa (i.e. alerting the personnel to the presence of the vehicle). Proposals that have been tried include rear view closed circuit cameras or radar systems directed to the rear of the vehicle.

However, hitherto no entirely satisfactory solution to this problem, providing the operator with warning of personnel at any location around the vehicle, has been found.

There has now been devised a safety system that addresses the above-described problem and which overcomes or substantially mitigates the disadvantages of previously proposed approaches to that problem.

According to the invention, a safety system for use with moving vehicles and/or plant on a commercial or industrial site comprises a radio frequency transmitter unit adapted to transmit positional information indicative of its location and a receiver unit adapted to compare the location of the transmitter unit with its own location and to emit a warning signal if the distance between the transmitter unit and the receiver unit is less than a predetermined threshold value.

The transmitter unit and/or the receiver unit, and preferably both, desirably incorporate Global Positioning System (GPS) functionality by means of which each derives positional information regarding its location.

In a preferred arrangement in which a person carries the transmitter unit and the receiver unit is mounted on a vehicle, the vehicle-based unit receives the transmission from the transmitter unit and calculates the distance between the vehicle and the pedestrian's location. When the person approaches the vehicle or plant or the vehicle or plant approaches the person, the GPS location signal emitted by the transmitter is picked up by the receiver and, if the distance falls below the aforementioned threshold, causes a warning signal to be emitted. The warning signal may be emitted by the transmitter unit or the receiver unit or both.

Alternatively, of course, the person may carry the receiver and the transmitter may be mounted on the moving vehicle or plant.

It is preferred, however, that the system comprise a plurality of radio frequency transceivers, so that both the vehicle or plant operator and the approaching person are alerted to the danger of collision.

In a preferred embodiment of the invention, all personnel working on a site carry a device. Each device has a unique ID code which identifies that device, and hence the person carrying it. The ID code may be embodied into a chip or chips built into the device. When a person carrying a device takes control of a vehicle such as a forklift truck his in-built device will handshake with the device in the vehicle and the in-built device will be deactivated. Operation of the vehicle may be enabled when the correct handshake has taken place. Operation of the vehicle may also be restricted to one or more persons who are "recognised" by the vehicle through the ID code associated with their device. For example, only certain personnel may be qualified to operate, say a dump truck or a fork lift truck, and the trucks may therefore be operable only if the device carried by one such person has the correct chip to enable a recognisable handshake.

The transmission capability of the transmitter unit may be of a limited range and devices respond to each other but only alert the operator if their separation is equal to or less than the threshold distance. The threshold distance may be determined by the speed of the plant. The warning signals emitted by the portable or vehicle-based units may be audible, visual or vibrating.

Devices installed within particular vehicles may operate in accordance with parameters characteristic of that particular vehicle. For instance, the threshold distance of the device may be dependent on speed/braking distance. For different vehicles, the type of warning signal may also be different.

The use of digital technology enables the usefulness of the system to be enhanced. For instance, the device can be used to record the arrival and departure of personnel from the worksite, as well as recording the movements of individual personnel around the site. The system may automatically log alerts, creating a record of personnel responsible for such alerts and the identification of persistent "offenders". The device may be automatically activated/deactivated upon entry to/exit of buildings or particular zones on site.

In order to eliminate false alarms caused by the proximity of vehicles working at different levels, the devices may include some form of altimeter instrument.

An example of the invention will now be described in detail with reference to the drawings, in which: -
Fig. 1 is a diagrammatic illustration of a safety system according to the invention in use;
Fig. 2 is a block circuit diagram of a transmitter unit; and
Fig. 3 is a block circuit diagram of a receiver unit.

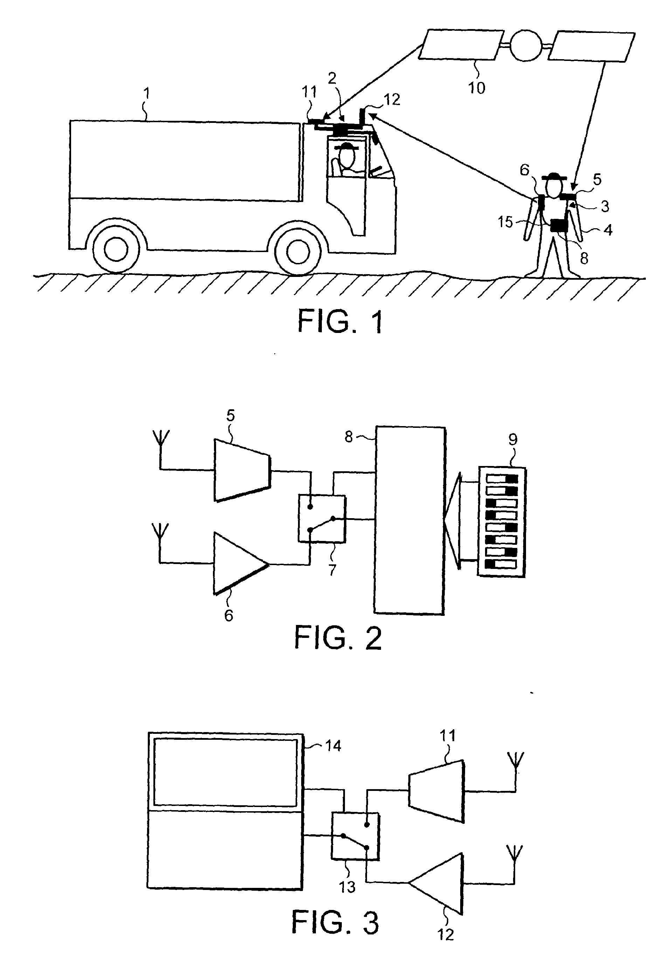

Reference will first be made to Fig. 1 of the drawings in which a receiver unit 2 is mounted on a vehicle 1 and a transmitter unit 3 is worn by a person 4. The transmitter unit includes a GPS receiver 5 for receiving location signals from the GPS system represented by a satellite 10 and a VHF radio transmitter 6. The receiver unit also includes a GPS receiver 11 for receiving location signals from the satellite 10 and a VHF radio receiver 12. The transmitter 6 relays the position signals from the GPS system and transmits the signals over a limited range. The receiver 12 receives the signals from the transmitter 6 and the receiver unit compares these signals with the position signals which it receives from the GPS system. If the signals indicate that the position of the vehicle 1 is less than a predetermined threshold from the person 4, a warning signal is generated.

As shown in Fig. 2, the transmitter unit 3 comprises the GPS receiver 5 and the VHF radio transmitter 6 which are connected to a control switch 7 which in turn is connected to a comparator 8 in the form of an integrated circuit which processes signals received from the GPS receiver 5 and transmits signals to the transmitter 6 giving details of its locational position. The transmitter unit may also include a warning device (not shown).

The receiver unit shown in Fig. 3 comprises the GPS receiver 11 and the VHF radio receiver 12 which are connected to a control switch 13 which in turn is connected to a comparator 14. The comparator may be connected to a separate warning device or it may be connected to the horn and/or flashing warning lights of the vehicle.

A panel 9 of identification switches may be provided on the side of the comparator 8 which are designed to interface with a corresponding panel mounted on the vehicle. By means of this arrangement, when a person wishes to drive the vehicle, he must first ensure that the switch panel 9 on his comparator 8 is interfaced with the corresponding panel on the vehicle. The switches on the panel are so arranged and the comparator on the vehicle is programmed that it will only allow operation of the vehicle if the switches are in a predetermined arrangement. By this means it is possible to ensure that only authorised personnel are permitted to drive the vehicle.

The GPS receiver 3 and radio transmitter 4 as well as the comparator 8 are desirably incorporated in a harness 15 which can be worn by a person 4. As shown in Fig. 1, the GPS receiver 3 should be located on one shoulder and the VHF radio transmitter is located in the region of the other shoulder of the person. The comparator 8 is desirably attached to a waist belt forming part of the harness 15. Alternatively, the receiver 3, transmitter 4 and comparator 8 may be incorporated into a single casing which can be located in a pocket (not shown) of the harness 15.

The VHF radio transmitter desirably has a local radio link frequency of 418 mHz and a power of 500 uW. The frequency of transmissions is preferably every second. The power supply for the vehicle unit will be the normal 12V or 24V vehicle power supply while the personnel transmitter unit is powered by rechargeable batteries. Data is transmitted as ASCII conforming to NMEA specifications and the GPS data output is 4800 Baud. The data transmissions should be protected by majority coding.

It will be seen that the system according to the invention provides a safe and reliable method of warning personnel of approaching vehicles and offers the possibility of warning drivers of vehicles of the presence of personnel in the vicinity.

The invention is not restricted to the above-described example but variations and modifications may be made without departing from the scope of the invention.

## Claims

1. A safety system for use with moving vehicles and/or plant on a commercial or industrial site, said system comprising a radio frequency transmitter unit (3) adapted to transmit positional information indicative of its location and a receiver unit (2) adapted to compare the location of the transmitter unit with its own location and to emit a warning signal if the distance between the transmitter unit (3) and the receiver unit (2) is less than a predetermined threshold value.

2. A safety system according to claim 1, **characterised in that** the transmitter unit (3) and/or the receiver unit (2) incorporate Global Positioning System (GPS) functionality.

3. A safety system according to claim 1 or claim 2, **characterised in that** the transmitter unit (3) incorporates an audible and/or visual warning device.

4. A safety system according to any one of the preceding claims, **characterised in that** the receiver unit (2) incorporates an audible and/or visual warning device.

5. A safety system according to any one of the preceding claims, **characterised in that** the transmitter unit (3) is adapted to be worn or carried by a person (4) and the receiver unit (2) is adapted to be mounted on a vehicle (1).

6. A safety device according to claim 5, **characterised in that** the transmitter unit (3) is provided with a unique code for the purpose of identifying the person (4) wearing or carrying the transmitter unit.

7. A safety device according to claim 6, **characterised in that** the receiver unit (2) is provided with means for recognising the unique code of the transmitter unit (3) for the purpose of restricting operation of the vehicle to authorised personnel only.

8. A safety device according to any one of claims 5 to 7, **characterised in that** the transmitter unit (3) includes a GPS receiver (5), a radio transmitter (6) and a device (8) for processing signals received from the receiver (5) and sending signals regarding the position of the unit to the transmitter (6).

9. A safety device according to claim 8, **characterised in that** the GPS receiver (5), the radio transmitter (6) and processing device (8) are incorporated in a harness adapted to be worn by a person.

10. A safety device according to any one of claims 5 to 9, **characterised in that** the receiver unit (2) includes a GPS receiver (11), a radio receiver (12) and a computer (14) for comparing the signals received from the receivers (11, 12) and for generating a signal to activate a warning device if the signals received from the receivers (11, 12) indicate that the distance from the transmitter unit (3) is below the said predetermined threshold value.
